# EUROPÄISCHE PATENTSCHRIFT

(11) **EP 4 187 530 B1**
(45) Veröffentlichungstag und Bekanntmachung des Hinweises auf die Patenterteilung: **24.06.2026**
(21) Anmeldenummer: 22210125.5
(22) Anmeldetag: 29.11.2022
(51) Int. Cl.: G10D 9/035, G10D 9/08, G10D 7/06

(54) **TONERZEUGENDES BLATT FÜR BLASINSTRUMENTE**
SOUND GENERATING REED FOR WIND INSTRUMENTS
ANCHE PRODUISANT DU SON POUR INSTRUMENTS À VENT

(30) Priorität: 30.11.2021 AT 509582021
(43) Veröffentlichungstag der Anmeldung: 31.05.2023
(73) Patentinhaber: Maxton GmbH, 1040 Wien (AT)
(72) Erfinder: FLUCH, Martin, 1040 Wien (AT)
(74) Vertreter: KLIMENT & HENHAPEL

(56) Entgegenhaltungen:
- DE-A1- 102019 200 651
- DE-U1- 8 904 968

## Beschreibung

Die Erfindung betrifft ein tonerzeugendes Blatt aus einem Verbundwerkstoff für Blasinstrumente, wobei es sich bei dem Verbundwerkstoff um einen mit Füllstoffen versehenen Kunststoff handelt, und es sich bei den Füllstoffen um eine Faserarmierung und Mikrohohlkugeln handelt, gemäß dem Oberbegriff von Anspruch 1.

Ein gattungsgemäßes Blatt wurde in der DE 10 2019 200 651 A1 beschrieben. Blasinstrumente wie die Klarinette oder das Saxophon weisen eine schnabelförmige Anblasvorrichtung auf, die aus einem Blatt und einem Mundstück gebildet wird. Das Blatt ist der eigentliche Tonerzeuger und wird am Mundstück befestigt. Durch den Luftstrom, der vom Musiker in das Instrument geblasen wird, beginnt das am Mundstück befestigte Blatt gegen das Mundstück zu vibrieren, wodurch eine Schwingung in der Luftsäule des Instruments entsteht. Mit der Unterlippe und dem Luftstrom kontrolliert der Spieler die Vibration des Blatts, wodurch er sowohl den Klang als auch die Intonation beeinflusst. Die Ausführung des Blatts ist somit von entscheidender Bedeutung für die Qualität des Klanges des Instruments. Es ist zumeist aus einem Rohrholz (Pfahlholz, *Arundo donax*) gefertigt. Das Gewebe des Arundo *donax* besteht aus längs verlaufenden Kapillarröhrchen ("Xyleme"). Die Xyleme sind in einer weichen, schaumartigen Masse eingebettet und miteinander verbunden. Die Gewebestruktur des Holzes ist für die Flexibilität und das Schwingungsverhalten verantwortlich.

Das Blatt wird dabei beim Spielen enorm belastet. Es bildet im unbelasteten Zustand mit dem Mundstück einen Spalt von etwa 1/100 mm, wobei der Ton durch Schwingungen des Blattes erzeugt wird, bei denen der Spalt je nach Tonhöhe mit etwa 500-2000 Schwingungen pro Sekunde geöffnet und geschlossen wird. Das Blatt befindet sich während des Spielens in einem permanent überlasteten Zustand, da es während des Spielens unter Druck gesetzt wird und unter Druck die oben erwähnten Schwingungen mit wechselnden Frequenzen vollziehen muss. Unter längerer Belastung kann es zu plastischen Verformungen kommen, die die Schwingfähigkeit im Belastungszustand beeinträchtigen. In diesem Zusammenhang wird auch vom Retardationsverhalten des Blattes gesprochen.

Diesen Belastungen muss das Blatt auch während längerer Spieldauer mit unverminderter Qualität standhalten. Dabei ist es der Feuchtigkeit durch die Atemluft des Spielers ausgesetzt, die bei einem Blatt aus Naturmaterialien für zunehmende Retardation sorgt, wodurch das Spielen erschwert wird, bis das Blatt bei längerer Spieldauer wegen übermäßiger Durchfeuchtung unbespielbar wird und getauscht werden muss.

Da Naturwerkstoffe auch Nachteile hinsichtlich Materialinhomogenität und Materialermüdung bei der Verarbeitung zeigen, was eine variable Qualität bei der Herstellung und Benutzung mit sich bringt, gibt es auch Bestrebungen zur Fertigung von Blättern aus Kunststoffen.

So wird in der EP 18734209.2 der Anmelderin ein tonerzeugendes Blatt aus Faserverbundwerkstoffen beschrieben, wobei es sich bei dem Faserverbundwerkstoff um ein faserverstärktes Polymercompound handelt, das ein thermoplastisches Elastomer umfasst, dem Mikrohohlkugeln beigemengt sind. Bei dem thermoplastischen Elastomer kann es sich etwa um ein thermoplastisches Copolyester (TPC) oder um ein thermoplastisches Elastomer auf Urethanbasis (TPU) handeln.

In der US 2009/0301284 A1 wird ein Klarinettenblatt aus einem Kunststoff beschrieben, das über Extrusionsverfahren hergestellt wird.

Aus der WO 2016/042259 A1 ist ein Kunststoffblatt bekannt, bei dem Fasern aus einem thermoplastischen Polymer in einer Polymermatrix aus einem Thermoplast eingebettet sind. Als Beispiel werden Polyolefine genannt. Die Polymerfasern sind als Endlosfasern ausgeführt, die in Längsrichtung des Blattes verlaufen.

In der DE 89 04 968 U1 wird ein tonerregendes Blatt aus einem formbeständigen, verstärkten Kunststoff beschrieben, der aus thermotropen flüssigkristallinen Polymeren besteht.

Wenngleich Spielbarkeit und Klangfarbe von Kunststoffblättern mitunter befriedigend sind, zeigt sich auch bei Kunststoffblättern bei längerer Spieldauer zunehmende Retardation aufgrund übermäßiger Durchfeuchtung. Dieser Nachteil ist insbesondere im professionellen Bereich von Bedeutung, wo das Blasinstrument mitunter über mehrere Stunden gespielt werden muss und dem Spieler ein hochqualitatives Spielen aufgrund einer verstärkten Retardation zunehmend schwer fällt.

Das Ziel der gegenständlichen Erfindung besteht somit darin ein tonerzeugendes Blatt bereitzustellen, das gegenüber bekannten Blättern bei vergleichbarer Klangqualität eine längere Spielbarkeit ermöglicht.

Dieses Ziel wird durch die Merkmale von Anspruch 1 erreicht. Anspruch 1 bezieht sich auf ein tonerzeugendes Blatt aus einem Verbundwerkstoff für Blasinstrumente, wobei es sich bei dem Verbundwerkstoff um einen mit Füllstoffen versehenen Kunststoff handelt, und es sich bei den Füllstoffen um eine Faserarmierung und Mikrohohlkugeln handelt. Erfindungsgemäß wird hierbei vorgeschlagen, dass es sich bei dem Kunststoff um ein thermoplastisches Polyurethan mit einer Shore-D Härte von 60 bis 90 handelt, und das thermoplastische Polyurethan eine Feuchtigkeitsaufnahme von 0,1-0,8% binnen 2h bei einem Normklima von 40°C und 92% relativer Luftfeuchtigkeit aufweist.

Thermoplastische Polyurethane sind im Vergleich zu den oben erwähnten Naturwerkstoffen für tonerzeugende Blätter unporös. Während Feuchtigkeit bei Naturwerkstoffen in den Poren des Matrixmaterials aufgenommen wird und zu einer zunehmenden Weichheit des Blattes bis zur Unspielbarkeit führt, nimmt ein thermoplastisches Polyurethan die Feuchtigkeit unter Vergrößerung des Volumens in das Matrixmaterial auf. Diese Volumsänderung ist umso größer, je stärker die Feuchtigkeitsaufnahme ist. Es zeigt sich, dass in der Praxis die dem Mundstück zugewandte Seite des Blattes während des Spielens höherer Feuchtigkeit ausgesetzt ist als die dem Mundstück abgewandte Seite des Blattes. Die Volumsänderung vollzieht sich somit an der dem Mundstück zugewandten Seite des Blattes stärker als an der dem Mundstück abgewandten Seite des Blattes. Da das Blatt am Mundstück an einem Ende eingespannt ist und mit dem anderen Ende frei schwingen kann, führt diese unterschiedliche Volumsänderung dazu, dass sich das Blatt geringfügig vom Mundstück weg biegt. Dieser geringfügig größere Abstand vom Mundstück wird erfindungsgemäß zur Kompensation der Werkstoff-Retardation aufgrund der

Durchfeuchtung genutzt. Hierfür muss aber die Feuchtigkeitsaufnahme während typischer Spielzeiten wohldefiniert erfolgen. Sie darf nicht zu gering sein, da ansonsten das zunehmende Retardationsverhalten nicht ausreichend kompensiert werden kann. Sie darf aber auch nicht zu stark sein, da das Blatt ansonsten unspielbar wird. Da die Feuchtigkeitsaufnahme von thermoplastischen Polyurethanen mit der Materialhärte korreliert, wird eine geeignete Feuchtigkeitsaufnahme erfindungsgemäß unter Festlegung der Shore-Härte des thermoplastischen Polyurethans mit einem Wert von Shore-D 60 bis 90 erreicht. Mit anderen Worten wird die erfindungsgemäß gewünschte Längenänderung des Blattes aufgrund von Feuchtigkeitsaufnahme nur bei ausreichender Basishärte des Matrixmaterials erreicht. Der erfindungsgemäße Härtebereich stellt für thermoplastische Polyurethane zwar einen Extrembereich dar, entsprechende thermoplastische Polyurethane sind aber verfügbar. Um hinsichtlich Steifigkeit und Dichte ähnliche Eigenschaften wie derzeit verwendete Naturwerkstoffe zu erzielen, wird das als Matrixmaterial verwendete thermoplastische Polyurethan faserarmiert ausgeführt und mit Mikrohohlkugeln versehen, wie noch näher ausgeführt werden wird. Diese Füllstoffe haben allerdings auf die vom Matrixmaterial determinierte Feuchtigkeitsaufnahme einen vernachlässigbaren Einfluss.

Das erfindungsgemäß vorgesehene thermoplastische Polyurethan weist zudem eine Feuchtigkeitsaufnahme von 0,1-0,8% binnen 2h bei einem Normklima von 40°C und 92% relativer Luftfeuchtigkeit auf. Dieses Normklima wird herangezogen, da es die Verhältnisse während des Spiels gut wiedergibt. Allerdings ist wie bereits erwähnt die dem Mundstück zugewandte Seite des tonerzeugenden Blattes während des Spiels höherer Feuchtigkeit ausgesetzt als die dem Mundstück abgewandte Seite, was den oben beschriebenen Biegeeffekt bewirkt.

Bei dem Polyurethan kann es sich etwa um ein thermoplastisches Polyetherurethan handeln. Alternativ kann es sich bei dem Polyurethan um ein thermoplastisches Polyesterurethan handeln.

Bei den Fasern der Faserarmierung handelt es sich vorzugsweise um Kohlefasern. Kohlefasern bewirken auch bei geringer Dosierung eine massive Zunahme der Steifigkeit, sodass die Gesamtdichte des Verbunds nicht wesentlich erhöht wird.

Additiv dazu lässt sich ein Kohlefaser-Verbundwerkstoff gut und präzise fräsen, wodurch eine außerordentlich hohe Blattgenauigkeit und Reproduzierbarkeit erzielt werden kann.

Zudem wird vorgeschlagen, dass es sich bei den Fasern der Faserarmierung um Schnittfasern mit Faserlängen von 1 bis 3 mm handelt. Aufgrund der Verwendung dieser Faserlängen kann ein nahezu isotropes Werkstoffverhalten mit besonders hoher Steifigkeit erzielt werden. Zudem kann eine gute Homogenisierung erzielt werden, wodurch homogene Spieleigenschaften des Blattes sichergestellt werden.

Bei den Mikrohohlkugeln kann es sich etwa um Glasmikrohohlkugeln handeln. Glasmikrohohlkugeln werden zumeist aus einem alkaliarmen Borosilikatglas gefertigt und sind chemisch inert und wasserunlöslich. Dieser Füllstoff zeichnet sich durch eine geringe Nenndichte und eine hohe Druckfestigkeit aus. Die Durchmesser dieser Mikrohohlkugeln liegen im Mikrometerbereich und betragen in der Regel zwischen 10 und 110 µm, wobei sie zumeist in einer Größenverteilung in diesem Bereich verfügbar sind.

Ein konkretes Ausführungsbeispiel sieht etwa vor, dass der Fasergehalt des Verbundwerkstoffes in einem Bereich von 10-15 Gewichtsprozent liegt und der Verbundwerkstoff 10-15 Gewichtsprozent Mikrohohlkugeln aufweist. Der verbleibende Masseanteil wird von der Polyurethan-Komponente gebildet. Eine solche Zusammensetzung ergibt einen Verbundwerkstoff, der aus 45-50 Volums-Prozent thermoplastisches Polyurethan und 50-55 Volums-Prozent Füllstoffen besteht. Mithilfe dieser Mengen an Füllstoffen können für den Verbundwerkstoff ein Elastizitätsmodul von 5.000-9.000 MPa und eine Dichte von etwa 0.75 g/cm³ eingestellt werden, sodass die physikalischen Eigenschaften von derzeit verwendeten Naturwerkstoffen gut reproduziert werden können.

Das erfindungsgemäße Blatt kann dabei als ein gepresster Formkörper ausgeführt sein. Dieser Formkörper kann im Zuge eines abschließenden formgebenden Schrittes durch Fräsen nachbearbeitet werden.

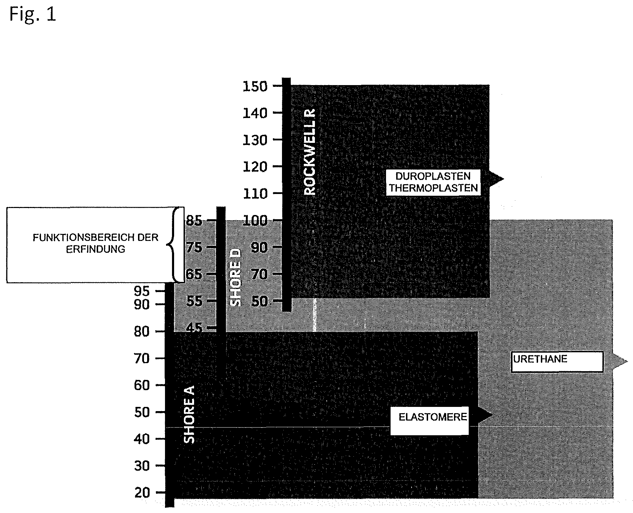

Die Erfindung wird in weiterer Folge mithilfe der beiliegenden Figur näher erläutert. Hierbei zeigt die
Fig. 1 ein Übersichtsdiagramm für Härten unterschiedlicher Kunststoffe und insbesondere von Urethanen unter Angabe des Funktionsbereichs der Erfindung.

Zur Herstellung eines erfindungsgemäßen Blattes aus einem Polyetherurethan oder einem Polyesterurethan wird zunächst in bekannter Weise die Polyol-Komponente mit der IsocyanatKomponente zur Polymerisierung des Polyetherurethans oder des Polyesterurethans gemischt. Der fließfähigen Mischung werden Glasmikrohohlkugeln sowie Kohlefasern mit Faserlängen von 1-3 mm so beigemengt, dass der Faseranteil und die Mikrohohlkugeln homogen in der fließfähigen Masse verteilt werden. Die relativen Mengenanteile werden gemäß einem Ausführungsbeispiel etwa so gewählt, dass der Fasergehalt des Verbundwerkstoffes 10 Gewichtsprozent beträgt und der Masseanteil der Mikrohohlkugeln 15 Gewichtsprozent. Der Masseanteil des Polyetherurethans oder des Polyesterurethans beträgt 75 Gewichtsprozent. Mithilfe einer solchen Zusammensetzung kann ein Verbundwerkstoff erzeugt werden, der zu 45 Volums-Prozent aus der Polyurethan-Matrix und zu 55 Volums-Prozent aus den Füllstoffen besteht, nämlich 5 Volums-Prozent Faseranteil und 50 Volumsprozent Mikrohohlkugeln.

Die mit den Füllstoffen versetzte Mischung wird in Formen gepresst und ausgehärtet. Nach der Aushärtung weisen die Formkörper ein Elastizitätsmodul von 5.000-9.000 MPa und eine Dichte von etwa 0.75 g/cm³ auf und können durch Fräsen noch nachbearbeitet werden.

Zur Herstellung eines erfindungsgemäßen Blattes aus einem thermoplastischen Polyetherurethan oder einem thermoplastischen Polyesterurethan wird zunächst das TPU-Ausgangsgranulat mit den Glasmikrohohlkugeln sowie den Kohlefasern mit Faserlängen von 1-3 mm über Compoundierung, beispielsweise in einem Extruder, vermengt. Aus der mit den Füllstoffen versetzten und homogenisierten Mischung wird über Spritzguss das Blatt gefertigt. Die relativen Mengenanteile werden in diesem Fall gemäß einem Ausführungsbeispiel etwa so gewählt, dass der Fasergehalt des Verbundwerkstoffes 15 Gewichtsprozent beträgt und der Masseanteil der Mikrohohlkugeln 15 Gewichtsprozent. Der Masseanteil des thermoplastischen Polyetherurethans oder des thermoplastischen Polyesterurethans beträgt 70 Gewichtsprozent. Diese Zusammensetzung ergibt einen Verbundwerkstoff, der zu 50 Volums-Prozent aus der thermoplastischen Polyurethan-Matrix und zu 50 Volums-Prozent aus den Füllstoffen besteht, nämlich 5 Volums-Prozent Faseranteil und 45 Volumsprozent Mikrohohlkugeln.

Das erfindungsgemäße Blatt weist eine ausgezeichnete Spielbarkeit und Klangfarbe auf und zeigt auch bei längerer Spieldauer und zunehmender Durchfeuchtung eine nahezu vollständige Kompensation des Retardationsverhaltens. Zudem können Steifheit und Dichte von derzeit verwendeten Naturwerkstoffen gut reproduziert werden.

## Patentansprüche

1. Tonerzeugendes Blatt aus einem Verbundwerkstoff für Blasinstrumente, wobei es sich bei dem Verbundwerkstoff um einen mit Füllstoffen versehenen Kunststoff handelt, und es sich bei den Füllstoffen um eine Faserarmierung und Mikrohohlkugeln handelt, **dadurch gekennzeichnet, dass** es sich bei dem Kunststoff um ein thermoplastisches Polyurethan mit einer Shore-D Härte von 60 bis 90 handelt, und das thermoplastische Polyurethan eine Feuchtigkeitsaufnahme von 0,1-0,8% binnen 2h bei einem Normklima von 40°C und 92% relativer Luftfeuchtigkeit aufweist.

2. Tonerzeugendes Blatt nach Anspruch 1, **dadurch gekennzeichnet, dass** es sich bei dem thermoplastischen Polyurethan um ein thermoplastisches Polyetherurethan handelt.

3. Tonerzeugendes Blatt nach Anspruch 1, **dadurch gekennzeichnet, dass** es sich bei dem thermoplastischen Polyurethan um ein thermoplastisches Polyesterurethan handelt.

4. Tonerzeugendes Blatt nach einem der Ansprüche 1 bis 3, **dadurch gekennzeichnet, dass** es sich bei den Fasern der Faserarmierung um Kohlefasern handelt.

5. Tonerzeugendes Blatt nach einem der Ansprüche 1 bis 4, **dadurch gekennzeichnet, dass** es sich bei den Fasern der Faserarmierung um Schnittfasern mit Faserlängen von 1 bis 3 mm handelt.

6. Tonerzeugendes Blatt nach einem der Ansprüche 1 bis 5, **dadurch gekennzeichnet, dass** es sich bei den Mikrohohlkugeln um Glasmikrohohlkugeln handelt.

7. Tonerzeugendes Blatt nach einem der Ansprüche 1 bis 6, **dadurch gekennzeichnet, dass** der Verbundwerkstoff aus 45-50 Volums-Prozent thermoplastisches Polyurethan und 50-55 Volums-Prozent Füllstoffen besteht.

8. Tonerzeugendes Blatt nach einem der Ansprüche 1 bis 7, **dadurch gekennzeichnet, dass** der Fasergehalt des Verbundwerkstoffes in einem Bereich von 10-15 Gewichtsprozent liegt.

9. Tonerzeugendes Blatt nach einem der Ansprüche 1 bis 8, **dadurch gekennzeichnet, dass** der Verbundwerkstoff 10-15 Gewichtsprozent Mikrohohlkugeln aufweist.

10. Tonerzeugendes Blatt nach einem der Ansprüche 1 bis 9, **dadurch gekennzeichnet, dass** es als ein gepresster Formkörper ausgeführt ist.

## Claims

1. Sound generating reed made of a composite material for wind instruments, wherein the composite material is a plastic containing fillers, and the fillers are fiber reinforcement and microhollow spheres, **characterized in that** the plastic is a thermoplastic polyurethane with a Shore D hardness of 60 to 90, and the thermoplastic polyurethane has a moisture absorption of 0.1-0.8% within 2 hours at a standard climate of 40°C and 92% relative humidity.

2. Sound generating reed according to claim 1, **characterized in that** the thermoplastic polyurethane is a thermoplastic polyether urethane.

3. Sound generating reed according to claim 1, **characterized in that** the thermoplastic polyurethane is a thermoplastic polyester urethane.

4. Sound generating reed according to any one of claims 1 to 3, **characterized in that** the fibers of the fiber reinforcement are carbon fibers.

5. Sound generating reed according to any one of claims 1 to 4, **characterized in that** the fibers of the fiber reinforcement are cut fibers with fiber lengths of 1 to 3 mm.

6. Sound generating reed according to any one of claims 1 to 5, **characterized in that** the microhollow spheres are glass microhollow spheres.

7. Sound generating reed according to any one of claims 1 to 6, **characterized in that** the composite material consists of 45-50 by volume percent thermoplastic polyurethane and 50-55 by volume percent fillers.

8. Sound generating reed according to any one of claims 1 to 7, **characterized in that** the fiber content of the composite material is in the range of 10-15 by weight percent.

9. Sound generating reed according to any one of claims 1 to 8, **characterized in that** the composite material comprises 10-15 percent by weight of microhollow spheres.

10. Sound generating reed according to any one of claims 1 to 9, **characterized in that** it is designed as a pressed molded body.

## Revendications

1. Anche produisant du son fabriquée à partir d'un matériau composite pour instruments à vent, dans laquelle le matériau composite est une matière plastique munies de charges et les charges sont un renfort de fibres et des microsphères creuses, **caractérisée en ce que** la matière plastique est un polyuréthane thermoplastique avec une dureté Shore D de 60 à 90 et le polyuréthane thermoplastique présente une absorption d'humidité de 0,1 à 0,8 % en 2 heures sous un climat normal de 40 °C et 92 % d'humidité relative.

2. Anche produisant du son selon la revendication 1, **caractérisée en ce que** le polyuréthane thermoplastique est un polyéther uréthane thermoplastique.

3. Anche produisant du son selon la revendication 1, **caractérisée en ce que** le polyuréthane thermoplastique est un polyester uréthane thermoplastique.

4. Anche produisant du son selon l'une des revendications 1 à 3, **caractérisée en ce que** les fibres du renfort de fibres sont des fibres de carbone.

5. Anche produisant du son selon l'une des revendications 1 à 4, **caractérisée en ce que** les fibres du renfort de fibres sont des fibres coupées avec des longueurs de fibres de 1 à 3 mm.

6. Anche produisant du son selon l'une des revendications 1 à 5, **caractérisée en ce que** les microsphères creuses sont des microsphères creuses en verre.

7. Anche produisant du son selon l'une des revendications 1 à 6, **caractérisée en ce que** le matériau composite est constitué de 45 à 50 pour cent en volume de polyuréthane thermoplastique et de 50 à 55 pour cent en volume de charges.

8. Anche produisant du son selon l'une des revendications 1 à 7, **caractérisée en ce que** la teneur en fibres du matériau composite est comprise dans une plage de 10 à 15 pour cent en poids.

9. Anche produisant du son selon l'une des revendications 1 à 8, **caractérisée en ce que** le matériau composite présente 10 à 15 pour cent en poids de microsphères creuses.

10. Anche produisant du son selon l'une des revendications 1 à 9, **caractérisée en ce qu'**elle est réalisée sous la forme d'un corps moulé pressé.
